# EUROPÄISCHE PATENTANMELDUNG

(11) **EP 0 926 417 A2**
(43) Veröffentlichungstag der Anmeldung: **30.06.1999**
(21) Anmeldenummer: 98124073.2
(22) Anmeldetag: 18.12.1998
(51) Int. Cl.: F16L 25/00, F16L 33/26

(54) **Rohrpresskupplung für Wellrohre**

(30) Priorität: 19.12.1997 DE 19756781; 25.03.1998 DE 19813064
(71) Anmelder: Knipping, Daniel, D-44797 Bochum (DE); Reckzeh, Manfred, 63457 Hanau (DE)
(72) Erfinder: Knipping, Daniel, D-44797 Bochum (DE); Reckzeh, Manfred, 63457 Hanau (DE)
(74) Vertreter: Bonsmann, Manfred, Dipl.-Ing.

(57) **Zusammenfassung**

Die Erfindung betrifft eine Rohrpreßkupplung, bei der im verpreßten Zustand wenigstens ein Endbereich eines Rohres (10) mittels einer außen auf das Rohr axial aufgeschobenen, radialen Preßkräften unterliegenden und ausübenden Quetschhülse (18) und vorzugsweise einer auf diese axial aufgeschobenen Überwurfpreßhülse (16) und einer in das Rohrende eingesetzten Stützhülse (20) verbunden ist. Das Rohr ist ein Wellenberge (13, 14) und Wellentäler (15) aufweisendes Wellrohr. Weiterhin ist ein außenseitig des Wellrohres in die Wellentäler (15) eingreifender und der Wellenform angepaßter, diese weitgehend ausfüllender Formkörper vorgesehen, durch den die radialen Preßkräfte der Quetschhülse (18) wenigstens teilweise in die Wellentäler (15) übertragen werden und so eine Deformation des Wellrohres (10) weitgehend vermieden wird. Der maximale Außendurchmesser des Stützkörpers (20) entspricht im wesentlichen dem minimalen Innendurchmesser des Wellrohres (10). Zur Aufnahme wenigstens von Teilbereichen der inneren Wellenberge (14) des Wellrohres können entsprechend angepaßte Ausnehmungen (26) in der Außenseite der Stützhülse (20) vorgesehen sein. Zur Abdichtung können O-Ringe (24) zwischen den innenseitigen Wellentälern und der Stützhülse sowie ein flächiges Dichtelement (36) zwischen Stützhülse und Rohrende vorgesehen sein.

## Beschreibung

Die Erfindung betrifft eine Rohrpreßkupplung, bei der im verpreßten Zustand wenigstens ein Endbereich eines Rohres mittels einer außen auf das Rohr axial aufgeschobenen, radialen Preßkräften unterliegenden und ausübenden Quetschhülse und einer in das Rohrende eingesetzten Stützhülse verbunden ist.

Derartige Rohrpreßkupplungen dienen zur schnellen, einfachen und langzeitdichten Verbindung von Rohrleitungen und zwar entweder zweier Rohrleitungen untereinander (Kupplung im engeren Sinne) oder zur Verbindung einer Rohrleitung mit einem Anschlußstück (einseitiger Rohranschluß). Als Rohrleitungen kommen bei bekannten Rohrpreßkupplungen sowohl Kunststoffals auch Metall-, z.B. Kupfer- oder Edelstahlrohre, sowie Mehrschicht-Verbundrohre in Frage.

Es sind jedoch keine Verpressungskonzepte zur Verbindung von Wellrohren bekannt. Wellrohre werden in der Installationstechnik häufig zur Herstellung semi-flexibler Verbindungen benötigt, so z.B. zum Anschluß von Pumpen an feste Rohrleitungssysteme, wodurch eine Übertragung von Pumpenvibrationen auf das Rohrleitungsnetz vermieden werden soll, oder als Ausgleichsabschnitt zur Kompensation thermischer Ausdehnung von Rohren, bei Drainagesystemen usw.. Wellrohre sind durch einen axial wellenförmig variierenden Durchmesser gekennzeichnet, der zur Ausbildung von Wellenbergen und Wellentälern führt. Durch Verformung dieser Wellenberge und Wellentäler sind Wellrohre in gewissen Grenzen dehn-, stauch- und biegbar. Ein Problem liegt jedoch darin, Wellrohre langzeitstabil mit einem Anschlußstück zu verbinden. Gemäß dem Stand der Technik werden Wellrohre aus Metall in dem zu verbindenden Endbereich glatt gezogen und anschließend verschweißt.

Dies bedingt jedoch einen hohen Aufwand zur Herstellung der Verbindung. Konventionelle Verpressungskonzepte sind nicht für Wellrohre geeignet, da sich das Wellenprofil unter dem den Verpressungskonzepten charakteristischen radialen Druck zwischen Außen- und Innenwand des Rohres verformt, was eine zuverlässige Abdichtung erschwert bzw. unmöglich macht.

Der Erfindung liegt die Aufgabe zugrunde, eine Rohrpreßkupplung der eingangs genannten Art zu schaffen, mittels derer Wellrohre auf einfache Art langzeitdicht miteinander verbunden werden können.

Zur Lösung dieser Aufgabe ist erfindungsgemäß vorgesehen, daß das Rohr ein Wellenberge und Wellentäler aufweisendes Wellrohr ist, und daß wenigstens ein außenseitig des Wellrohres in die Wellentäler eingreifender und der Wellenform angepaßter, diese weitgehend ausfüllender Formkörper vorgesehen ist, durch den die radialen Preßkräfte der Quetschhülse wenigstens teilweise in die Wellentäler übertragen werden und so eine Deformation des Wellrohres weitgehend vermieden ist, und daß der maximale Außendurchmesser des Stützkörpers im wesentlichen dem minimalen Innendurchmesser des Wellrohres entspricht.

Durch den wenigstens einen in die äußeren Wellentäler ein-greifenden Formkörper bleibt das Wellenprofil des Rohres im wesentlichen erhalten. Die radialen Preßkräfte, die bei dem vorliegenden axialen Verpressungskonzept vorzugsweise durch Überschieben einer Überwurfpreßhülse auf die Quetschhülse erzeugt werden, wirken durch den Formkörper auch auf die Innenseiten der außenliegenden Wellentäler, so daß die Innenseite des Wellrohrs gegen die Stützhülse gepreßt wird, ohne daß sich das Wellenprofil nennenswert verformt. Vorzugsweise sind mehrere in Wellentäler eingreifende Formkörper entlang des gesamten Verpressungsbereichs vorgesehen. Dadurch, daß der maximale Außendurchmesser des Stützkörpers im wesentlichen dem minimalen Innendurchmesser des Wellrohres entspricht, ist es möglich, das Rohrende zur Herstellung der Preßverbindung auf die Stützhülse axial aufzuschieben.

In zweckmäßiger Ausgestaltung der Erfindung kann vorgesehen sein, daß die Stützhülse zur Aufnahme wenigstens von Teilbereichen der inneren Wellenberge des Wellrohres entsprechend angepaßte Ausnehmungen aufweist. Diese Ausnehmungen nehmen die durch die Formkörper radial nach innen gepreßten Wellenberge auf und sichern somit das Wellrohr zusätzlich gegen Zuglasten. Der Außendurchmesser der Stützhülse darf jedoch den minimalen Innendurchmesser des Wellrohres nicht nennenswert überschreiten, um ein Aufschieben des Wellrohres zu ermöglichen. Zur Verbindung von Wellrohren mit glattem Innenrohr ist die Stützhülse vorzugsweise rippenförmig profiliert ausgebildet.

Zur innenseitigen Abdichtung des Wellrohres gegenüber der Stützhülse kann vorgesehen sein, daß wenigstens ein Wellental des Wellrohres auf der der Stützhülse zugewandten Innenseite ein ringförmiges elastisches Dichtelement aufweist, welches im Verpressungszustand zwischen der Innenseite des Wellentals und der Stützhülse abdichtet. Dabei kann es sich vorzugsweise um wärmebeständige O-Ringe handeln, die vor Herstellung der Preßverbindung innenseitig in eine oder mehrere Wellentäler des Wellrohres eingelegt werden. Die Stärke der O-Ringe wird vorteilhafterweise so bemessen, daß diese bei hergestellter Preßverbindung fest gegen die Stützhülse gedrückt werden.

Weiterhin kann zwischen der Stützhülse und der Innenseite des Wellrohres ein flächiges elastisches Dichtelement vorgesehen sein, mittels dessen die an die Stützhülse anliegenden Bereiche des Wellrohres abgedichtet sind. Bei dem Dichtelement kann es sich z.B. um eine aus Kunststoff oder Gummi geformte Beschichtung oder eine separat eingelegte Gummihülse handeln. Die durch die Formkörper an die Stützhülse angedrückten innenseitigen Wellenberge werden durch das flächige Dichtelement abgedichtet, so daß grundsätzlich auf das zusätzliche Einlegen von O-Ringen verzichtet werden kann. Eine maximale Dichtsicherheit wird jedoch durch Anwendung beider Maßnahmen erzielt.

Weiterhin kann vorgesehen sein, daß der wenigstens eine außenseitig des Wellrohres in die Wellentäler eingreifende Formkörper einstückig mit der Quetschhülse ausgebildet ist. Die Quetschhülse weist also vorzugsweise eine zum außenseitigen Wellenprofil des Rohres komplementäre Struktur auf.

Die Quetschhülse ist vorzugsweise aus Kunststoff ausgebildet und besteht aus zwei Abschnitten mit jeweils halbkreisförmigem Profil, die an einer Seite mit einem Filmscharnier verbunden sind. Durch die geteilte Ausbildung der Quetschhülse wird deren Anbringen auf dem Rohrende erst ermöglicht, da ein axiales Aufschieben der Quetschhülse über das Rohrende aufgrund des Innenprofils der Quetschhülse nicht möglich ist. Die Ausbildung der Quetschhülse aus Kunststoff ist von Vorteil, da Kunststoffe preiswert und korrosionsbeständig sind und eine inhärente Flexibilität aufweisen, durch die eine langzeitstabile Verbindung auch unter wechselnden Temperaturen und Lasten gewährleistet ist. Zur Verbesserung der Festigkeit und Temperaturbeständigkeit und zur Vermeidung von Kriecheffekten werden vorteilhafterweise modifizierte Kunststoffe z.B. mit Glasfaser-, Kohlefaser oder Mineralfaserzusatz verwendet. Je nach Einsatzzweck ist auch die Verwendung von Fluorkunststoffen (insbesondere bei hohen Anforderungen an die Temperaturbelastbarkeit) oder thermoplastischen Polyestern möglich.

Alternativ zur einstückigen Ausbildung der Formkörper kann vorgesehen sein, daß der wenigstens eine außenseitig des Wellrohres in die Wellentäler eingreifende Formkörper als geschlitzter Ring ausgebildet ist. Vorzugsweise werden Spreng- oder Federringe aus Metall verwendet, die vor dem Herstellen der Preßverbindung in die außenseitigen Wellentäler eingelegt werden. Um das Einlegen zu erleichtern, können die Ringe zusätzlich eine dem Schlitz gegenüberliegende Schwächungsstelle aufweisen. Die Stabilität der Preßverbindung wird dadurch nicht negativ beeinflußt, da die Ringe lediglich radiale Kräfte übertragen und keine Beanspruchung entlang des Ringumfangs erfolgt. Bei Verwendung von Ringen als Formkörper wäre es grundsätzlich auch denkbar, auf die Verwendung einer Überwurfpreßhülse zu verzichten und die Preßkräfte lediglich durch Überschieben einer Quetschhülse über die Ringe zu erzielen.

Insbesondere zur Verbindung von Kunststoff-Wellrohren mit größeren Durchmessern kann es zweckmäßig sein, anstatt einer Überwurf-Preßhülse ein Spannband bzw. eine Schelle (vorzugsweise aus Metall) zu verwenden. Dieses Spannwand bzw. diese Schelle können entweder über die Quetschhülse geschoben und dann angezogen werden. Alternativ können Spannband bzw. Schelle auch derart profiliert ausgebildet werden, daß diese erfindungsgemäß außenseitig in die Wellentäler des Wellrohres eingreifen und somit eine zusätzliche Quetschhülse überflüssig machen.

In einer alternativen Ausführungsform der Erfindung kann ein radiales Verpressungskonzept mit den o.g. Merkmalen zur Verpressung von Wellrohren vorgesehen sein.

Die Erfindung wird nachfolgend unter Bezugnahme auf die in den Zeichnungen dargestellten Ausführungsbeispiele näher erläutert. Es zeigen:
- Fig. 1: eine Längsschnitt-Explosionsdarstellung einer ersten Ausführungsform der erfindungsgemäßen Rohrpreßkupplung im montierten Zustand,
- Fig. 2: eine Querschnittsansicht einer Quetschhülse für die Ausführungsform gem. Fig. 1,
- Fig. 3: eine Längsschnitt-Explosionsdarstellung einer zweiten Ausführungsform der erfindungsgemäßen Rohrpreßkupplung im montierten Zustand,
- Fig. 4: eine Querschnittsansicht einer Quetschhülse für die Ausführungsform gem. Fig. 3,
- Fig. 5: eine Längsschnitt-Explosionsdarstellung einer erfindungsgemäßen Rohrpreß-Verbindungskupplung für Wellrohre mit glattem Innenrohr und
- Fig. 6: eine Querschnittsansicht einer Schlauchschelle für eine Ausführungsform gem. Fig. 5.

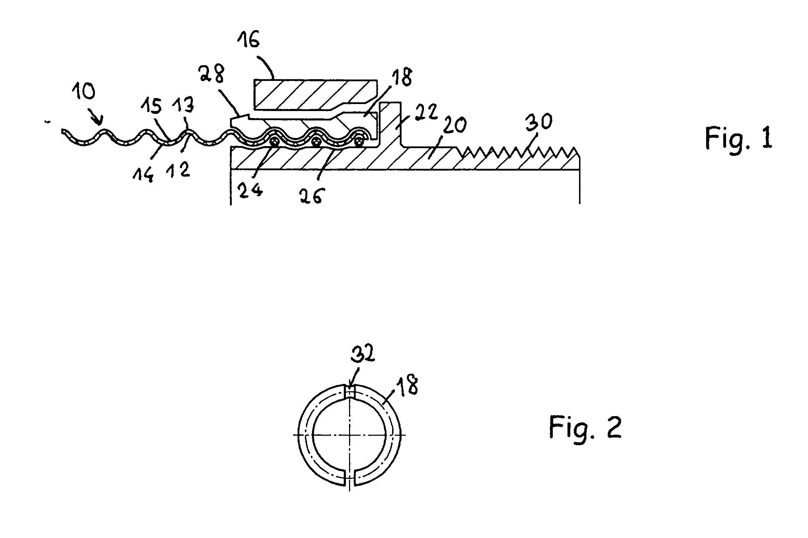

In Fig. 1 ist eine erste Ausführungsform einer erfindungsgemäßen Rohrpreßkupplung im montierten Zustand in Längsschnittdarstellung gezeigt, wobei die einzelnen Elemente zwecks besserer Darstellung radial auseinandergezogen sind. In Fig. 1 ist nur der obere Teil der Schnittdarstellung gezeigt; der untere Teil ist entsprechend spiegelsymmetrisch. Ein mit 10 bezeichnetes Rohrende eines Wellrohres weist innenseitige Wellentäler 12 bzw. innenseitige Wellenberge 14 (jeweils außenseitigen Wellenbergen 13 bzw. außenseitigen Wellentälern 15 entsprechend). Das Wellrohr 10 weist ein geschlossenes Wellenprofil auf. Die Erfindung kann aber auch bei Wellrohren mit schraubenlinienförmigen Wellenprofil zur Anwendung kommen. Das Wellrohr 10 ist aus Metall hergestellt; der Einsatz der Erfindung ist jedoch auch bei Kunststoff-Wellrohren und bei Kunststoff-Wellrohren mit glattem Innenrohr möglich. Zur Herstellung der Preßverbindung ist eine Überwurfpreßhülse 16, eine Quetschhülse 18 sowie eine Stützhülse 20 vorgesehen. Die Stützhülse weist einen Anschlagflansch 22 auf, der gleichzeitig als Hintergriff zum Ansatz eines zur Herstellung der Quetschverbindung verwendeten Montagewerkzeugs (nicht dargestellt) dient. Auf der anderen Seite des Anschlagflansches 22 ist ein Gewindebereich 30 vorgesehen. Alternativ kann selbstverständlich auch z.B. ein weiterer Preßverbindungsbereich für Wellrohre zur Herstellung einer Wellrohrkupplung vorgesehen sein. Die Stützhülse weist ferner Ausnehmungen 26 zur Aufnahme von Teilabschnitten der innenseitigen Wellenberge 14 auf. Die Quetschhülse 18 ist aus einem modifizierten Kunststoff hergestellt und weist ein Innenprofil auf, das an das außenseitige Wellenprofil des Rohres 10 angepaßt ist, so daß die Quetschhülse in die Wellentäler 15 eingreift. Die Außenseite der Quetschhülse weist weiterhin einen axial sich verändernden Durchmesser auf. Die Überwurfpreßhülse 16 weist ebenfalls einen sich verändernden Innendurchmesser auf, derart, daß beim Aufschieben der Überwurfpreßhülse 16 auf die Quetschhülse 18 radiale Preßkräfte erzeugt werden. In die innenseitigen Wellentäler 12 sind im Verbindungsbereich wärmebeständige O-Ringe 24 eingelegt, durch die eine Abdichtung der innenseitigen Wellentäler 12 gegenüber der Stützhülse 20 erreicht wird. Die Überwurfpreßhülse 16 ist gegenüber einem unerwünschten Lösen von der Quetschhülse 18 durch eine Rastnase 28 geschützt.

Die Quetschhülse 18 ist gemäß Fig. 2 im Querschnitt geschlitzt ausgebildet und weist an der dem Schlitz gegenüberliegenden Seite ein Filmscharnier 32 auf. Dadurch kann die Quetschhülse 18 zur Herstellung der Preßverbindung über das Wellrohr 10 geklappt werden, bevor die Überwurfpreßhülse 16 mittels eines Montagewerkzeugs übergeschoben wird.

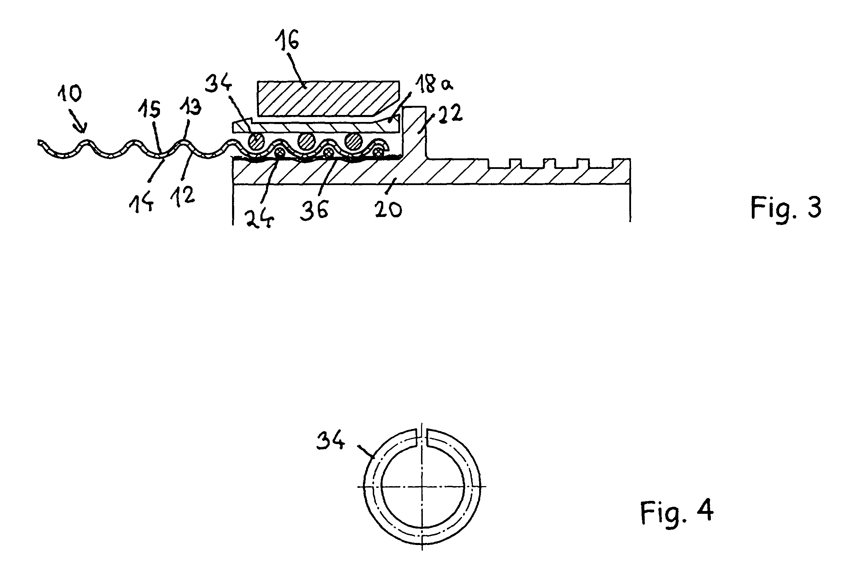

In Fig. 3 ist ein alternatives Ausführungsbeispiel der Erfindung dargestellt, wobei gleiche Teile mit gleichen Bezugszeichen versehen sind. Die Quetschhülse 18a ist bei dieser Ausführungsform innenseitig glatt geformt. Die Unterstützung der außenseitigen Wellentäler erfolgt mittels geschlitzter Metallringe 34 (siehe auch Fig. 4), die vor Herstellung der Preßverbindung in das Wellrohr eingelegt werden. Diese Metallringe 34 erfüllen lediglich eine Stütz-, jedoch keine Dichtfunktion. In den innenseitigen Wellentälern sind O-Ringe 24 zur Abdichtung vorgesehen. Zusätzlich ist die Stützhülse 20 mit einer elastischen Gummibeschichtung 36 versehen, durch die eine Abdichtung der innenseitigen Wellenberge gegenüber der Stützhülse 20 erfolgt.

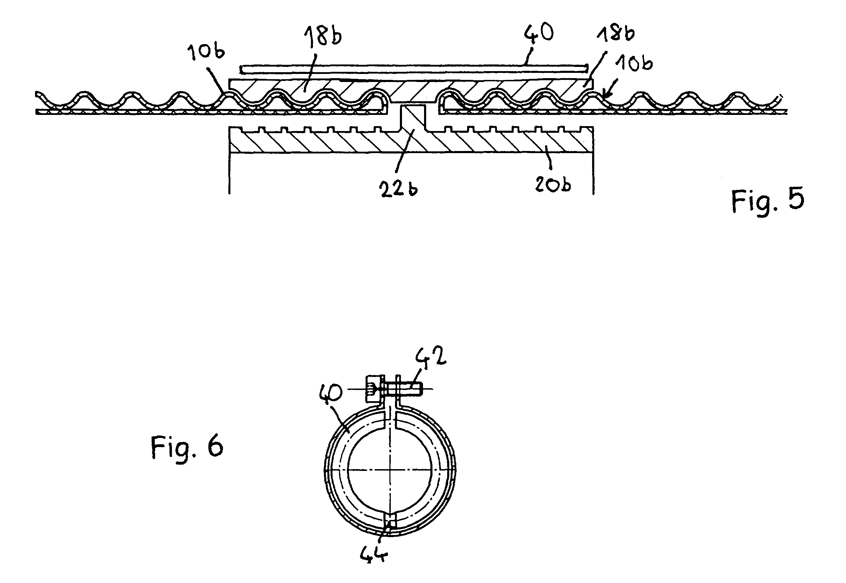

In Fig. 5 ist eine Ausführungsform der erfindungsgemäßen Rohrpreßkupplung für Wellrohre 10b mit glattem Innenrohr dargestellt. Der Stützkörper 20b weist in diesem Falle eine rippenförmige Profilierung zur optimalen Abdichtung gegenüber dem Innenrohr auf. Zusätzliche Dichtringe sind nicht erforderlich. Anstelle einer Überwurf-Preßhülse ist eine Metallschelle 40 vorgesehen, die gem. Fig. 6 eine Spannschraube 42 und eine Scharniereinrichtung 44 aufweist. Insbesondere bei Kunststoff-Wellrohren mit größerem Durchmesser kann eine Schelle gegenüber einer Überwurf-Preßhülse vorteilhaft sein, da diese preiswerter herzustellen ist und weiterhin kein spezielles Montagewerkzeug erfordert. Die Schelle 40 ist vorzugsweise aus Metall (z.B. Stahl) - wahlweise mit Kunststoffbeschichtung - ausgebildet. Alternativ kann die Schelle auch Profilierungen aufweisen, die in die außenseitigen Wellentäler des Wellrohres eingreifen, so daß auf die Quetschhülse 18b verzichtet werden kann. Weiterhin ist die Quetschhülse 18b bei dem in Fig. 5 dargestellten Verbindungselement für zwei Wellrohre durchgängig über den Anschlagflansch 22b hinaus ausgebildet, so daß eine einzige Quetschhülse 18b zur Verbindung zweier Wellrohre 10b dient. Dadurch wird bei Verwendung von Wellrohren mit glattem Innendurchmesser Stabilität gegenüber Längs-Zugbelastungen gewährleistet.

## Patentansprüche

1. Rohrpreßkupplung, bei der im verpreßten Zustand wenigstens ein Endbereich eines Rohres (10) mittels einer außen auf das Rohr axial aufgeschobenen, radialen Preßkräften unterliegenden und ausübenden Quetschhülse (18) und einer in das Rohrende eingesetzten Stützhülse (20) verbunden ist, dadurch gekennzeichnet, daß das Rohr ein Wellenberge (13, 14) und Wellentäler (12, 15) aufweisendes Wellrohr ist, und daß wenigstens ein außenseitig des Wellrohres in die Wellentäler (15) eingreifender und der Wellenform angepaßter, diese weitgehend ausfüllender Formkörper vorgesehen ist, durch den die radialen Preßkräfte der Quetschhülse (18) wenigstens teilweise in die Wellentäler (15) übertragen werden und so eine Deformation des Wellrohres (10) weitgehend vermieden ist, und daß der maximale Außendurchmesser des Stützkörpers (20) im wesentlichen dem minimalen Innendurchmesser des Wellrohres (10) entspricht.

2. Rohrpreßkupplung nach Anspruch 1, gekennzeichnet durch eine auf die Quetschhülse (18) axial aufgeschobene Überwurfpreßhülse (16).

3. Rohrpreßkupplung nach Anspruch 1 oder 2, dadurch gekennzeichnet, daß die Stützhülse (20) zur Aufnahme wenigstens von Teilbereichen der inneren Wellenberge (14) des Wellrohres (10) entsprechend angepaßte Ausnehmungen (26) aufweist.

4. Rohrpreßkupplung nach einem der Ansprüche 1 bis 3, dadurch gekennzeichnet, daß wenigstens ein Wellental (12) des Wellrohres auf der der Stützhülse zugewandten Innenseite ein ringförmiges elastisches Dichtelement (24) aufweist, welches im Verpressungszustand zwischen der Innenseite des Wellentals (12) und der Stützhülse (20) abdichtet.

5. Rohrpreßkupplung nach einem der Ansprüche 1 bis 4, dadurch gekennzeichnet, daß zwischen der Stützhülse (20) und der Innenseite des Wellrohres ein flächiges elastisches Dichtelement (36) vorgesehen ist, mittels dessen die an die Stützhülse anliegenden Bereiche des Wellrohres abgedichtet sind.

6. Rohrpreßkupplung nach einem der Ansprüche 1 bis 5, dadurch gekennzeichnet, daß der wenigstens eine außenseitig des Wellrohres in die Wellentäler eingreifende Formkörper einstückig mit der Quetschhülse (18) ausgebildet ist.

7. Rohrpreßkupplung nach Anspruch 6, dadurch gekennzeichnet, daß die Quetschhülse (18) aus Kunststoff ausgebildet ist und aus zwei Abschnitten mit jeweils halbkreisförmigem Profil besteht, die an einer Seite mit einem Filmscharnier (32) verbunden sind.

8. Rohrpreßkupplung nach einem der Ansprüche 1 bis 5, dadurch gekennzeichnet, daß der wenigstens eine außenseitig des Wellrohres in die Wellentäler eingreifende Formkörper als geschlitzter Ring (34) ausgebildet ist.

9. Rohrpreßkupplung, bei der im verpreßten Zustand wenigstens ein Endbereich eines Rohres mittels einer radial auf das Rohrende aufgepreßten, radiale Preßkräfte ausübenden Quetschhülse und einer in das Rohrende eingesetzten Stützhülse verbunden ist, insbesondere nach einem der Ansprüche 1 bis 8, dadurch gekennzeichnet, daß das Rohr ein Wellenberge und Wellentäler aufweisendes Wellrohr ist, und daß wenigstens ein außenseitig des Wellrohres in die Wellentäler eingreifender und der Wellenform angepaßter, diese weitgehend ausfüllender Formkörper vorgesehen ist, durch den die radialen Preßkräfte der Quetschhülse wenigstens teilweise in die Wellentäler übertragen werden und so eine Deformation des Wellrohres weitgehend vermieden ist, und daß der maximale Außendurchmesser des Stützkörpers im wesentlichen dem minimalen Innendurchmesser des Wellrohres entspricht.
